# EUROPÄISCHE PATENTANMELDUNG

(11) **EP 2 368 426 A2**
(43) Veröffentlichungstag der Anmeldung: **28.09.2011**
(21) Anmeldenummer: 11158936.2
(22) Anmeldetag: 19.03.2011
(51) Int. Cl.: A01K 1/12, A01K 5/01, A01K 29/00

(54) **Anordnung zur Unterbringung von Tieren, automatische Melkvorrichtung und Verfahren zum computergesteuerten Verwalten von Tieren**

(30) Priorität: 24.03.2010 DE 102010016126
(71) Anmelder: Hartmann Grundbesitz GmbH & Co. KG, 92265 Edelsfeld (DE)
(72) Erfinder: Hartmann, Hans, 92265, Edelsfeld (DE)
(74) Vertreter: Böhm, Thomas

(57) **Zusammenfassung**

Es wird eine Anordnung (1) beschrieben zur Unterbringung von milchgebenden Tieren mit mindestens zwei Ruhebereichen (2, 3), in denen Tiere aus mindestens zwei Gruppen ruhen können, einem Fressbereich (20, 30), in dem Tieren Futter angeboten wird, einem Melkbereich (7) mit mindestens einem Melkroboter (10) und einer Computersteuerung (21) mit Mikrocomputer und Programmspeicher, einem Gang (40, 50), einem Koteinwurfschacht (4) mit einer Länge mindestens über der Breite des Gangs (40, 60) und mit einem quer über der Breite des Gangs (40, 50) und in Längsrichtung des Gangs verfahrbaren Schieber (5, 6), der Kot von den Tieren in den Koteinwurfschacht schiebt. Die Haltung der Tiere wird erleichtert und die Milchabgabe von Tieren wird vereinfacht, indem der Melkbereich derart ausgebildet ist, dass der mindestens eine Melkroboter für die mindestens zwei Gruppen zugänglich ist und der Melkbereich eine Vorrichtung zum automatischen Melken umfasst, bei der ein Futtertrog (11, 12) an einem Melkplatz (8, 9) im Melkbereich (7) mittels einer gesteuerten Bewegungsvorrichtung in eine erste, das Tier zu melkenden Grundposition vor das Tier in Maulhöhe und in eine zweite, den Melkplatz (8, 9) öffnende Position verfahrbar, schwenkbar oder schiebbar ist, so dass eine Auslasstür an dem Melkplatz nicht erforderlich ist, und wobei dem Tier ein im Wesentlichen gerader Laufweg zu dem Melkplatz und aus dem Melkplatz heraus bereitgestellt wird.

## Beschreibung

### Stand der Technik

Die Erfindung bezieht sich auf eine Anordnung zur Unterbringung von milchgebenden Tieren mit mindestens einem Ruhebereich, in dem Tiere ruhen, einem Fressbereich, in dem den Tieren Futter angeboten wird, einem Melkbereich, mit mindestens einem Melkroboter und einer Computersteuerung mit Mikrocomputer und Programmspeicher, einer Tieridentifikationseinrichtung und mit mindestens einem Melkplatz, mindestens einem Gang im Ruhebereich, der den Ruhebereich mit dem Melkbereich verbindet, einem Koteinwurfschacht und mit einem quer über der Breite des Gangs und in Längsrichtung des Gangs verfahrbaren Schieber, der den Kot der Tiere in den Koteinwurfschacht schiebt.

Die Erfindung bezieht sich ferner auf eine Vorrichtung zum automatischen Melken von Tieren, insbesondere Kühen, für einen Melkbereich in einer, insbesondere oben beschriebenen, Anordnung zur Unterbringung von milchgebenden Tieren mit einer Tieridentifikationseinrichtung, die mit einem Tieridentifikationsmittel am Tier, einer Computersteuerung sowie einem Melkroboter und einem elektrisch ansteuerbaren Einlass zusammenwirkt und mit einem Futtertrog.

Die Erfindung bezieht sich ferner auf ein Verfahren zum computergesteuerten Verwalten von freilaufenden milchgebenden Tieren, die in einer, insbesondere oben beschriebenen Anordnung freilaufen, wobei die Anordnung mit mindestens zwei Ruhebereichen, einem Fressbereich, einem Melkbereich mit einem Melkroboter mit mindestens einem Melkplatz, einer Computersteuerung und mit mindestens einer ersten Tieridentifikationseinrichtung ausgebildet ist.

Die Erfindung bezieht sich ferner auf ein Computerprogrammprodukt, das in einem Programmspeicher mit Programmbefehlen von einer Computersteuerung ladbar ist um alle Schritte eines oben beschriebenen Verfahrens auszuführen, wenn das Programm in der Computersteuerung ausgeführt wird.

Es ist ein Stall als Anordnung mit einer Einfriedung mit einem Ruhebereich, einem Fressbereich und einem Melkbereich mit einem Melkroboter bekannt. Es ist folgender Stand der Technik zu dem bekannt.

Die DE 36 50 755 T2 beschreibt eine Vorrichtung zum automatischen Melken mit stirnseitigen Türen. Zur Raumersparnis sind die Türen mittels einer Parallelogramm-Konstruktion über hydraulische oder pneumatische Zylinder computergesteuert schwenkbar ausgebildet. An der Ausgangstür ist innenseitig ein Futtertrog angeordnet. Das zu melkende Tier kann somit während seines Aufenthaltes in dem Melkstand Kraftfutter fressen. Das Tier soll den rechteckig ausgebildeten Melkstand aufgrund des Wegschwenkens der Ausgangstür mit dem Futtertrog schneller verlassen können.

Die DE 60 2004 010 883 T2 beschreibt eine computergesteuerte Anordnung mit einem Ruhebereich, einem Fütterungsbereich, einem Melkbereich, einer Sortiereinrichtung für Tiergruppen und einer Tieridentifikationsvorrichtung, um mindestens ein Tor in Abhängigkeit der Identifikation des Milchtieres zu öffnen. Der Bewegungsverkehr der zu melkenden Tiere ist gesteuert, die Tiere können in den Fütterungsbereich nur nach Durchlaufen des Melkbereichs oder passieren einer Tieridentifikationsvorrichtung erreichen.

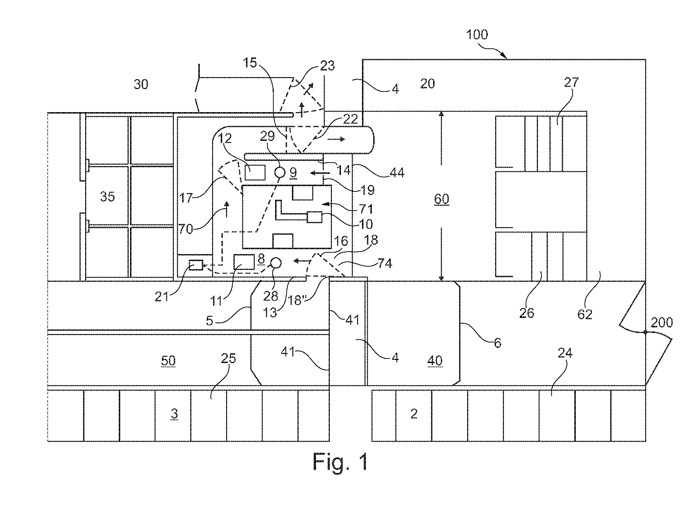

Die DE 10 2007 045 997 A1 von Hartmann beschreibt einen Stall, der ein Hängewagenbahnsystem umfasst. Das Hängewagenbahnsystem zur (a) Versorgung eines Futtertisches mit Futter, (b) Reinigung des Futtertisches und von nebeneinander angeordneten und an einen Laufgang angrenzenden Liegeboxen für Kühe und (c) Versorgung der Liegeboxen mit Einstreumaterial, umfasst mindestens einen Hängewagen, der (i) mindestens einen Vorratsbehälter zur Aufnahme des Futters und/oder Einstreumaterials, (ii) mindestens einen Auswurf für das Futter und/oder Einstreumaterial und (iii) eine Reinigungseinrichtung umfasst, wobei der Hängewagen über den Futtertisch und die nebeneinander angeordneten Liegeboxen bewegbar ist. In dem Laufgang kann eine als Mistschieber ausgeführte Viehtreibereinrichtung von einem Ende des Laufgangs zu dem anderen Ende des Laufgangs hin- und herbewegt werden. So kann der Laufgang gereinigt werden, insbesondere von den Exkrementen der Kühe. Zur Beseitigung der Verunreinigungen werden diese in einen an einem Ende des Laufgangs, in einem Außenbereich des Stalls angeordneten Misteinwurf, hinein geschoben. Ein Melkbereich ist an dem anderen Ende des Laufgangs weit entfernt von dem/den Misteinwurf/Misteinwürfen vorgesehen, siehe [0083] und Fig. 1.

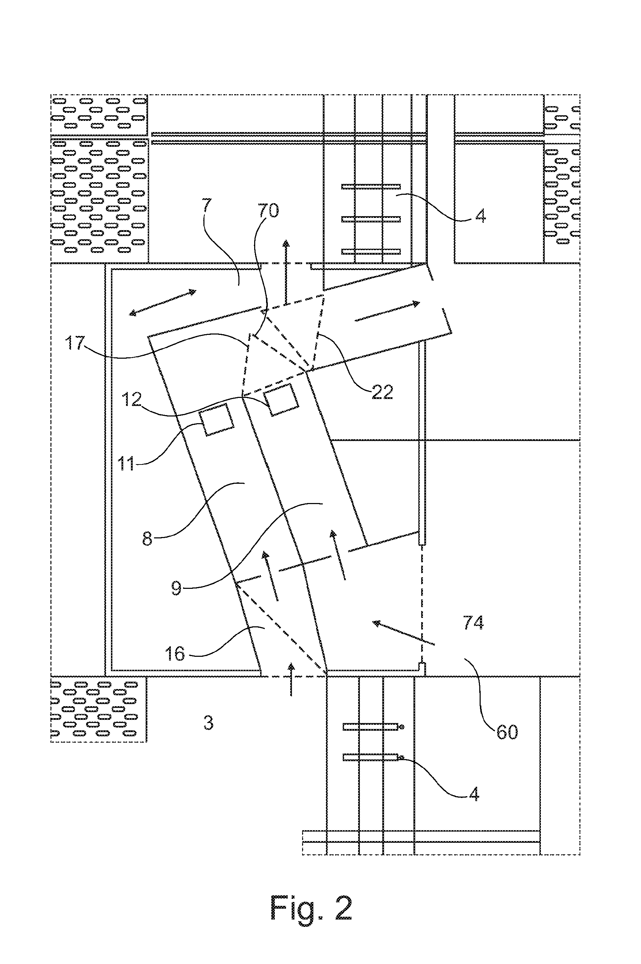

Die WO 2005/112613 A1 beschreibt eine Behausung zum automatischen Melken von Tieren, die in einem Melkbereich einen Melkplatz oder eine Melkstation mit einer Einrichtung zum Befestigen von Zitzenbechern, Melken und Ablösen der Zitzenbecher und einer Einlassvorrichtung, die einem Tier erlaubt von einem ersten Bereich alternativ in den Melkbereich oder einen zweiten Bereich zu gelangen, umfasst und zusätzlich eine Tieridentifizierungseinrichtung, die ein Tier, das die Einlassvorrichtung betritt, identifiziert, und eine Steuereinrichtung umfasst, die zur Steuerung der Einlassvorrichtung vorgesehen ist, anhängig von der Identität des Tieres und davon, ob es eine Erlaubnis zum Melken besitzt oder nicht, wobei der erste Bereich als Fütterungsbereich für Raufutter eingerichtet ist, in dem die Tiere keinen Zugang zu Kraftfutter haben, der zweite Bereich als Fütterungsbereich für Kraftfutter eingerichtet ist, in dem die Tiere keinen Zugang zu Raufutter haben, die Zugangsvorrichtung einem Tier, das sie betritt, das keine Erlaubnis zum Melken besitzt, immer Zugang zu dem Fütterungsbereich für Kraftfutter erlaubt, der Fütterungsbereich für Kraftfutter eine Station für Kraftfutter umfasst, wobei die Station eine Einrichtung zur Tieridentifizierung einschließt und ein sie besuchendes Tier immer mit einer Teilmenge seiner individuellen Ration versorgt. In dem ersten Bereich werden Laufgänge mit einem Räumer oder Mistschieber von Mist gereinigt, der zu einer Misttransporteinrichtung geschoben wird, die den Mist in einen Mistentsorgungsraum transportiert. Die Misttransporteinrichtung und der Mistentsorgungsraum sind im Außenbereich der Behausung angeordnet und weit von dem Melkbereich entfernt, siehe Fig. 2 bis 4. Die Melkplätze in dem Melkbereich sind so ausgeführt, dass sie jeweils eine Einlassstür und eine Auslasstür aufweisen. Dabei haben die Tiere keinen im Wesentlichen geraden Laufweg zu dem Melkplatz und aus dem Melkplatz heraus, sondern müssen schräg von der Seite über die Einlasstür den Melkplatz betreten. Außerdem müssen die Tiere beim Verlassen des Melkplatzes auch wieder schräg durch die Auslasstür den Melkplatz verlassen. Ein schneller einfacher Durchgang des Tieres ist somit nicht möglich. Die Durchsatzkapazität des Melkplatzes wird dadurch beeinträchtigt.

Die DE 694 22 945 T2 beschreibt eine Vorrichtung zum automatischen Melken, bei der ein Melkroboter in einem Stall automatisch zu einer Kuh bewegt wird und sie melkt. Der Stall ist nicht als Freilaufstall konzipiert, in dem die Tiere freilaufen zwischen Ruhebereich, Fressbereich und Melkbereich und sich durch freie Bewegungsmöglichkeit entspannt und wohl fühlen können, wodurch das Melkverhalten maximierbar ist. Für die Kühe sind Ruheboxen vorgesehen, aber kein davon getrennter Melkbereich. Vielmehr werden die Kühe in den Ruheboxen beim Melken in einer Ruhebox durch eine spezielle Positioniervorrichtung in der Ruhebox festgehalten oder darin eingesperrt. Ferner wird kein von den Ruheboxen getrennter Fressbereich vorgesehen, sondern die Kühe erhalten ihr Futter, sowohl Raufutter, als auch Kraftfutter, ebenfalls in den Ruheboxen. In diese Ruheboxen, in denen auch gemolken wird, und die daher auch als Melkplatz dienen, können die Tiere zwar im Vorwärtsgang eintreten. Dabei haben die Tiere zwar einen im Wesentlichen geraden Laufweg zu dem Melkplatz. Wenn die Tiere diesen Melkplatz verlassen, können sie aber nur rückwärts heraus. Dies ist für die Tiere sehr umständlich und dauert auch sehr lang. Wegen des Konzepts des Stalls haben die Tiere aber auch gar keinen besonderen Anreiz die Boxen zu verlassen. Ein Laufgang, der an einer Reihe von Ruheboxen entlang verläuft, wird mit einem Förderer von Dung gereinigt, der an einem Ende der Reihe in einen Behälter abgeführt wird. Der Behälter ist im Randbereich des Stalls angeordnet.

Es ist Aufgabe der vorliegenden Erfindung, eine Anordnung, eine Vorrichtung und ein Verfahren, sowie ein Computerprogrammprodukt der Eingangs genannten Art zu verbessern, in dem die Haltung der Tiere erleichtert und vereinfacht wird und die Milchabgabe von Tieren dadurch verbessert wird.

### Offenbarung der Erfindung

Erfindungsgemäß wird die Aufgabe durch den Gegenstand der Patentansprüche 1, 3, 9 und 13 gelöst. Vorteilhafte Weiterbildungen ergeben sich aus den abhängigen Ansprüchen.

Es ist ein Gedanke der Erfindung, eine Anordnung möglichst effizient auszubilden, so dass milchgebende Tiere, insbesondere Kühe, eine maximale freie Bewegungsmöglichkeit haben, sich dabei entspannt und wohl fühlen und somit das Melkverhalten maximierbar ist. Dabei können sie trennbar verwaltet und gehalten werden.

Die Aufgabe wird dadurch gelöst, dass eine Vorrichtung zum automatischen Melken von Tieren, insbesondere Kühen, bereitgestellt wird für einen Melkbereich in einer Anordnung zur Unterbringung von milchgebenden Tieren mit einer Tieridentifikationseinrichtung, die mit einem Tieridentifikationsmittel am Tier, einer Computersteuerung sowie einem Melkroboter und einem elektrisch steuerbaren Einlass zusammenwirkt und mit einem Futtertrog, wobei der Futtertrog an einem Melkplatz im Melkbereich mittels einer gesteuerten Bewegungsvorrichtung in eine erste, das Tier zu melkenden Grundposition vor das Tier in Maulhöhe und in eine zweite, den Melkplatz öffnende Position verfahrbar, schwenkbar oder schiebbar ist, so dass eine Auslasstür an dem Melkplatz nicht erforderlich ist, und wobei das Tier einen im Wesentlichen geraden Laufweg, insbesondere im Vorwärtsgang, zu dem Melkplatz und aus dem Melkplatz heraus hat. In der ersten Grundposition wird dem zu melkenden Tier Futter, vorzugsweise Kraftfutter, angeboten. Der Futtertrog ist dazu günstig vor dem Tier in Maulhöhe. Gleichzeitig versperrt der Futtertrog den geraden Durchgang als Ausgang nach vorne. Nach dem Melkvorgang, wenn der Futtertrog in die zweite, den Melkplatz öffnende Position verfahren, geschwenkt oder verschoben ist, ist auch der Durchgang nach vorne geradeaus frei und der Futtertrog somit in der öffnenden Position, so dass eine Auslasstür an dem Melkplatz nicht erforderlich ist. Das zu melkende Tier kann so leicht im Vorwärtsgang einen Melkplatz betreten und im Vorwärtsgang nach vorne verlassen. Das Tier kann durch den Melkplatz, unterbrochen durch den Melkvorgang, im Wesentlichen gerade hindurchgehen.

Ferner wird eine Anordnung, insbesondere ein Stall, bereitgestellt zur Unterbringung von milchgebenden Tieren mit mindestens zwei Ruhebereichen, in denen Tiere aus mindestens zwei Gruppen ruhen können, einem Fressbereich, in dem Tieren Futter angeboten wird, einem Melkbereich mit mindestens einem Melkroboter und einer Computersteuerung mit Mikrocomputer und Programmspeicher, einem Gang, einem Koteinwurfschacht und mit einem quer über der Breite des Gangs und in Längsrichtung des Gangs verfahrbaren Schieber, der Kot von den Tieren in den Koteinwurfschacht schiebt, wobei der Melkbereich derart ausgebildet, dass der mindestens eine Melkroboter für die mindestens zwei Gruppen zugänglich ist und der Melkbereich eine erfindungsgemäße Vorrichtung zum automatischen Melken umfasst.

Gemäß der Erfindung wird die Durchsatzkapazität eines Melkplatzes durch das vereinfachte Betreten und Verlassen vorteilhaft erhöht. Da der Melkbereich von mindestens zwei Ruhebereichen erreicht werden kann, wird der mindestens eine Melkroboter vorteilhaft effizient genutzt.

Bei einer bevorzugten Ausführungsform teilt der Koteinwurfschacht bei der Anordnung den Ruhebereich in einen ersten und einen zweiten Ruhebereich. Dies hat den Vorteil, dass der Koteinwurfschacht im Inneren der Anordnung in einer überdachten Einfriedung ausgebildet ist. Ein Koteinwurfschacht im Inneren und nicht an einer äußeren Begrenzung der Anordnung vorzusehen, hat den Vorteil, dass die Anordnung an Grenzen beispielsweise an der Längsachse in beiden Richtungen flexibel verlängerbar ist, wenn beispielsweise die Anordnung vergrößert werden soll, um mehr Tiere aufzunehmen. Außerdem besteht keine Gefriergefahr für den Koteinwurfschacht im Winter. Ferner ist der Gang am Ende der Anordnung barrierefrei für einen Austritt der Tiere ins Freie außerhalb der Einfriedung, also der Anordnung. Somit können sich die Tiere freier bewegen, fühlen sich wohler, was die Haltung und die Milchabgabe der Tiere verbessert und vereinfacht.

Gemäß einer weiter bevorzugten Ausführungsform ist der Koteinwurfschacht angrenzend an den Melkbereich angeordnet, dies hat den Vorteil, dass die Tiere zum Melkbereich aus zwei verschiedenen Ruhebereichen zusammengeführt werden können und der Melkbereich als zentraler Ort von Tieren aus beiden Ruhebereichen aufgesucht werden kann.

Gemäß einer weiter bevorzugten Ausführungsform fällt eine verlängerte Abgrenzungskante von der Länge des Koteinwurfschachts mit einer Umgrenzungskante des Melkbereichs im Wesentlichen zusammen. Somit können der Kot aus dem Ruhebereich, der mittels eines verfahrbaren Schiebers aus dem Gang des Ruhebereichs in den Koteinwurfschacht geführt wird, zusammen mit dem Kot aus dem Melkbereich in einem zentralen Kanal gesammelt und zusammen abgeführt werden.

Um die Anordnung möglichst kosteneffizient zu realisieren und eine vorhandene Geometrie möglichst effizient auszunutzen, ist bevorzugt der Melkbereich möglichst mit einer Breite von einer Doppelreihe mit Kopf an Kopf gegenüberliegend angeordneten Ruheplätzen des Ruhebereichs ausgebildet. Die Kopf an Kopf gegenüberliegend angeordneten Ruheplätze nehmen eine Gesamtlänge von ca. 4,60 m bis 5,50 m ein. Dies ist eine ideal vorgegebene Breite eines Melkbereichs, um den Raum der Anordnung möglichst effizient auszunutzen. Die Länge des Melkbereichs kann entsprechend des benötigten Raums für Melkplätze differieren und hat mindestens die Breite des Melkbereichs.

Um den Tieren eine möglichst hohe Bewegungsfreiheit zu ermöglichen, umfasst die Anordnung einen Orientierungsbereich an einem Ende des Gangs zwischen Melkbereich und angrenzendem Ruhebereich, sowie Fressbereich. Die Tiere können über den Orientierungsbereich aus einem der drei Bereiche kommend auswählen, in welchen anderen Bereich der drei Bereiche sie nun gehen wollen. Ein festgelegter Tierverkehr, wie im eingangs beschriebenen Stand der Technik, ist nicht vorgesehen.

Gemäß einer weiter bevorzugten Ausführungsform ist ein weiterer Durchgangsbereich zwischen Ruhe- und Fressbereich angeordnet. Dies hat den Vorteil, dass die Tiere entsprechend ihrer Rangordnung untereinander, den für sie angenehmeren Weg zwischen Fressbereich und Ruhebereich bzw. Melkbereich wählen können, in dem sie entweder ihren Weg über den Durchgangsbereich oder den Orientierungsbereich zum Fressbereich oder Melkbereich wählen, und somit beispielsweise einem ranghöheren Tier ausweichen können.

Weiter bevorzugt ist im Melkbereich und insbesondere im Orientierungsbereich ein Spaltenboden aus armiertem Beton angeordnet. Der Spaltenboden führt Fäkalien und Kot schnell in einen zentralen Kanal, der mit dem Koteinwurfschacht verbunden ist ab. Dadurch ist der Reinigungsaufwand durch das Personal minimiert.

Gemäß einer weiter bevorzugten Ausführungsform weist die Anordnung einen Freiluftzugang auf, um die Einfriedung in einen Außenbereich zu verlassen. Somit können die Tiere die überdachte Anordnung, die ein Stall ist, verlassen und beispielsweise in die Sonne gehen.

Es ist ein Gedanke der Erfindung, um den Melkroboter effizienter einzusetzen, die Tiere aus verschiedenen Ruhebereichen im gemeinsamen Melkbereich zu melken, insbesondere an zumindest einem gemeinsamen Melkplatz. Der Melkbereich ist somit derart ausgebildet, dass der Melkplatz von zwei verschiedenen Tiergruppen erreicht wird, an dem die Tiere aus verschiedenen Tiergruppen einzeln mittels des Melkroboters gemolken werden.

Um die Tiere wieder in die mindestens zwei verschiedenen Gruppen aufzuteilen, umfasst der Melkbereich bevorzugt eine computer- und tiergesteuerte Sortiereinrichtung, um die Tiere sortiert aus dem Melkbereich herauszuführen. Die Sortiereinrichtung umfasst beispielsweise eine computergesteuerte Schwenktür, die einen Gang zum ersten Gruppenbereich oder zum zweiten Gruppenbereich freigibt. Die Sortiereinrichtung arbeitet mit einer zweiten Tieridentifikationseinrichtung und einer Computersteuerung zusammen, um somit die Tür tier- und rechnergesteuert zu betätigen. Es gibt unterschiedliche Tiergruppen, da das Tier abhängig von seinem Laktationszyklus zwischen verschiedenen Tiergruppen wechselt.

Der Melkbereich kann in einer bevorzugten Ausführungsform zwei zueinander parallel angeordnete Melkplätze, die auch als Melkboxen bezeichnet werden können, aufweisen. Die Melkplätze sind vorzugsweise in Längsrichtung quer zu Doppelruheliegeplätzen von Doppelreihen im Ruhebereich angeordnet. Um die Verfügbarkeit der Melkplätze zu erhöhen, können die zu melkenden Kühe aus verschiedenen Reihen vom Ruhebereich jeden Melkplatz aufsuchen. Ferner können die Tiere aus getrennten Gruppen zumindest einen gemeinsamen Melkplatz benutzen oder alle verfügbaren Melkplätze.

Um den Tierverkehr aus zwei getrennten Tiergruppen und deren Ruhebereichen zu regeln, ist in einem gemeinsamen Zugangsbereich vom Melkbereich eine zwangsgeführte Tür angeordnet. Somit ist immer nur ein Eintritt zum Zugangsbereich für eine Tiergruppe offen, während der andere Zugang für eine weitere Tiergruppe von der zwangsgeführten Tür blockiert wird. Die Tür wird von den Tieren mechanisch bewegt und hin und her geschwenkt, so dass immer nur ein Tier einen freien Eintritt zum Zugangsbereich hat.

Gemäß einer bevorzugten Ausführungsform ist für eine größere Tiergruppe ein erster Ruhebereich groß und für eine kleine Tiergruppe ein zweiter Ruhebereich klein ausgebildet. Beispielsweise ist ein kleiner Ruhebereich für eine Tiergruppe, die gerade frisch gekalbt hat, vorgesehen. Diese Tiergruppe braucht kürzere Wege zum Melkbereich, da diese Tiere häufiger gemolken werden und mehr Ruhe, da das Kalben Kraft gekostet hat.

Gemäß einer die Erfindung weiterbildenden Ausführungsform sind abhängig vom Melkbedarf der beiden Tiergruppen bevorzugt von der kleinen Tiergruppe nur ein Melkplatz und von der großen Tiergruppe mindestens zwei Melkplätze verwendbar. Also ist ein Melkplatz sowohl von der großen und kleinen Tiergruppe nutzbar und der zweite nur von der großen Tiergruppe.

Um einen möglichst kostengünstigen und platzsparenden Aufbau der Anordnung zu realisieren, ist bei einer besonderen Ausführungsform zwischen den parallelen Melkplätzen der Melkroboter angeordnet.

Gemäß einer alternativen Ausführungsform kann aus Gründen einer individuellen bevorzugten Raumausgestaltung der Melkroboter ober- oder unterhalb oder seitlich von beiden Melkplätzen angeordnet sein, wobei beide Melkplätze parallel und direkt nebeneinander angeordnet sind.

Gemäß einer alternativen Ausführungsform sind die Melkplätze rechtwinklig zu einander angeordnet. Dies ist vorteilhaft, weil mehr Platz im Roboterbereich entsteht, sollte der Mensch die Technik unterstützen müssen, wenn beispielsweise der Roboter ausfällt. Rechtwinklig zueinander angeordnete Melkplätze haben den Vorteil, dass sie von einem Melkroboter, der ein abgewandelter Industrieroboter ist, leicht bedienbar sind.

Die Aufgabe wird mit einer Vorrichtung zum automatischen Melken dadurch gelöst, dass der Futtertrog an einem Melkplatz im Melkbereich mittels einer gesteuerten Bewegungsvorrichtung in eine erste, das Tier zu melkende Grundposition vor das Tier in Maulhöhe und in eine zweite, den Melkplatz öffnende Position verfahrbar, schwenkbar oder schiebbar ist. Eine Auslasstür ist am Melkplatz somit nicht mehr erforderlich. Das zu melkende Tier kann gerade zu einem Melkplatz laufen und gerade aus dem Melkplatz herauslaufen. Ein schneller einfacher Durchgang des Tieres ist somit möglich. Die Durchsatzkapazität des Melkplatzes ist somit erhöht.

Bevorzugt ist die Vorrichtung zum automatischen Melken im Melkbereich in einer oben beschriebenen Anordnung realisiert. Somit wird der vorhandene Raum optimal und kosteneffizient ausgenutzt.

Gemäß einer weiterbevorzugten Ausführungsform ist der Futtertrog nach vorne und oben wegschwenkbar. Der Futtertrog wird somit am Melkplatz dem Tier nach Beendigung des Melkvorgangs nach vorne weg gezogen, so dass eine Vorwärtsbewegung des Tieres eingeleitet wird, da das Tier am Futtertrog aufgrund von Lockstoffen weiter Kraftfutter zu sich nehmen will. Jedoch wird der Futtertrog in eine Höhe weggeschwenkt, so dass das Tier den Futtertrog nicht mehr erreichen kann und der Ausgang frei ist, um den Melkplatz zu verlassen.

Gemäß einer alternativen Ausführungsform ist der Futtertrog von einer Seite vom Melkplatz ein- und ausziehbar. Diese alternative Ausführungsform bietet sich an, wenn aufgrund räumlicher Gegebenheiten ein Schwenken unpassend ist und die Befüllung des Futtertrogs von der Seite am Melkplatz und nicht über dem Melkplatz erfolgen soll.

Damit das Tier nach Beendigung des Melkvorgangs den Melkplatz sicher verlässt oder falls ein Tier in den Melkplatz kommt, ohne eine Melkberechtigung zu haben, beispielsweise, weil es vor einer kurzen Zeit erst gemolken wurde, ist eine Treibervorrichtung am Melkplatz angeordnet. Die Treibervorrichtung ist von der Computersteuerung ansteuerbar, die mit dem Melkroboter und einer Tieridentifikationseinrichtung zusammenwirkt. Die Treibervorrichtung kann beispielsweise eine mechanische Einrichtung sein, um das Tier aus dem Melkplatz zu treiben. Bevorzugt ist die Treibervorrichtung, da eine solche sehr effektiv und kostengünstig ist, als flexibler Draht ausgebildet, der das Tier berührt und mit elektrischem Strom beaufschlagt. Die Treibervorrichtung ist somit eine mittels elektrischem Strom wirkende Einrichtung. Das Tier empfindet den Strom als unangenehm und verlässt den Melkplatz.

Die Aufgabe wird mit einem Verfahren zum computergesteuerten Verwalten von freilaufenden milchgebenden Tieren dadurch gelöst, dass ein Tier zu einem Melkplatz im Melkbereich durch Freigeben einer Zugangstür hereingelassen wird, mittels einer Tieridentifikationseinrichtung das Tier identifiziert wird und geprüft wird, ob das Tier eine Melkberechtigung hat, im positiven Fall das Tier mit dem Melkroboter gemolken wird, im negativen Fall oder nach dem Melkvorgang eine Einrichtung zum Verlassen des Melkplatzes freigegeben wird, vorzugsweise indem der Futtertrog weggeschwenkt wird, und insbesondere geprüft wird, ob das Tier den Melkplatz verlassen hat und besonders bevorzugt das Tier mittels einer Treibervorrichtung aus dem Melkplatz getrieben wird.

Unter Freigeben einer Zugangstür oder einer Einrichtung ist jede mechanische, elektromechanische, hydraulisch oder pneumatisch gesteuerte Tür zu verstehen. Dabei kann die Zugangstür entweder nur passiv entriegelt werden oder aktiv bewegt werden. Die Zugangstür kann vorgespannt sein. Die Einrichtung kann eine Platzaustrittstür sein.

Um einen zentrierten Zugang zu schaffen, ist die Zugangstüre bevorzugt aus zwei schwenkbaren Türhälften ausgebildet, die jeweils um eine Achse an beiden Seiten des Türrahmens schwenkbar.

Gemäß einem die Erfindung weiterbildenden Verfahren wird die Aufgabe dadurch gelöst, dass mindestens ein Melkplatz Tieren aus zwei getrennten Ruhebereichen zugänglich gemacht wird, Tiere in einem Ausgangsbereich des Melkbereichs, die mittels einer zweiten Tieridentifikationseinrichtung identifiziert werden, einer von mindestens zwei Gruppen zugeordnet werden und eine Sortiereinrichtung mit der Computersteuerung angesteuert wird, damit die Tiere der richtigen Gruppe zugeführt werden, wobei vorzugsweise geprüft wird, ob das Tier den Ausgangsbereich verlassen hat, im negativen Fall eine Treibervorrichtung von der Computersteuerung angesteuert wird, um das Tier aus dem Melkbereich zu treiben. Somit wird ein Melkbereich effizient ausgenützt und Tiere können aus verschiedenen Ruhebereichen die gleichen Melkplätze aufsuchen, wobei sie nicht an feste, vom Menschen vorgegebene Zeiten gebunden sind. Sie können individuell ausgemolken werden.

Gemäß einer weiter bevorzugten Ausführungsform werden den Tieren aus getrennten Ruhebereichen mindestens zwei Melkplätze angeboten. Nach Durchlaufen des Melkplatzes werden die Tiere wieder zusammengeführt und mittels der Sortiereinrichtung für die verschiedenen Ruhebereiche bzw. in verschiedene Gruppen wieder aufgeteilt. So können die Tiere nach dem Melken wieder in die gleichen Gruppen und den zugehörigen Ruhebereichen aufgeteilt werden wie vor dem Melken. Die Tiere können aber auch in neue Gruppen aufgeteilt werden mit den entsprechend neuen Zuordnungen zu den Ruhebereichen. Insbesondere können beispielsweise Tiere aus zwei, drei oder vier Gruppen oder noch mehr, denen ein gemeinsamer Melkbereich mit mindestens zwei Melkplätzen und mindesgtens zwei Melkrobotern zugänglich ist, nach dem Melken mit der Sortiereinrichtung in einem Gang und damit in einer Gruppe zusammengeführt werden.

Die Erfindung wird mit einem Computerprogrammprodukt dadurch gelöst, dass es in einen Programmspeicher mit Programmbefehlen einer Computersteuerung ladbar ist, die alle Schritte der oben beschriebenen Verfahren ausführt, wenn das Programm in der Computersteuerung ausgeführt wird. Die Computersteuerung ist in einer Wirkverbindung mit mindestens einer Tieridentifikationseinrichtung, einem Melkroboter, mit mindestens einer Sortiereinrichtung und einer Türsteuerung. Die Türsteuerung umfasst entweder eine elektromechanische ver- und entriegelbare Schließvorrichtung oder ist pneumatisch oder hydraulisch betätigbar. Die Türsteuerung umfasst eine Zugangstür mit Aktor und elektrischer Steuerung, die durch die Computersteuerung realisiert ist. Das Computerprogrammprodukt hat den Vorteil, dass das Verfahren individuell an Tiere und an die Anordnung aus empirisch ermittelten Verhalten jederzeit kostengünstig angepasst werden kann.

Es versteht sich, dass die, vorstehend genannten und nachstehend noch zu erläuternden, Merkmale nicht nur in der jeweils angegebenen Kombination, sondern auch in anderen Kombinationen verwendbar sind.

### Kurze Beschreibung der Zeichnungen

Die Erfindung wird im Folgenden anhand eines Ausführungsbeispiels unter Bezugnahme auf Zeichnungen näher erläutert. Es zeigen:
- Fig. 1: eine schematische Draufsicht einer Anordnung mit einem Melkbereich in einer Einfriedung,
- Fig. 2: eine schematische Draufsicht einer Anordnung mit einem Melkbereich in einer Einfriedung gemäß einer zweiten Ausführungsform,
- Fig. 3: eine schematische Draufsicht einer Anordnung mit einem Melkbereich in einer Einfriedung gemäß einer dritten Ausführungsform,
- Fig. 4: einen Querschnitt eines Spaltenbodens,
- Fig. 5: ein Flussdiagramm eines Verfahrens zum Führen von frei herumlaufenden Tieren und
- Fig. 6: ein Flussdiagramm eines Verfahrens zum Sortieren von Tieren in einem Melkbereich.

### Ausführungsformen der Erfindung

Die Fig. 1 zeigt eine schematische Draufsicht einer Anordnung 1 zur Unterbringung von milchgebenden Tieren in einer Einfriedung, die vorzugsweise überdacht und mit getrennten Ruhebereichen 2, 3 ausgebildet ist. In den Ruhebereichen 2, 3 können die Tiere ihr Futter entweder in Einzel- oder Doppelreihen 24, 26, 27 verdauen und verarbeiten. Die Ruhebereiche 2, 3 umfassen muldenförmige Liegeboxen. Die Doppelreihen 26, 27 haben Liegeboxen mit einer gegenüberliegenden Kopf an Kopf Anordnung.

Der Ruhebereich 2 ist vom Ruhebereich 3 durch einen Koteinwurfschacht 4 getrennt, der quer über die Breite von einem Gang 40 vom Ruhebereich 2 und einem Gang 50 vom Ruhebereich 3 ausgebildet ist. Der erste Ruhebereich 2 ist für eine große Tiergruppe vorgesehen, mit Tieren, die im Wesentlichen den gleichen Laktationszyklus haben. Diese große Tiergruppe wird durchschnittlich zweimal am Tag gemolken. Der zweite Ruhebereich 3 ist für eine kleine Tiergruppe vorgesehen, die häufiger gemolken werden, da diese Tiergruppe frisch gekalbt hat und mehr Ruhe brauchen.

Der Gang 40, 50 wird jeweils mit einem Schieber 5, 6, der in Längsrichtung des Gangs 40, 50 verfahrbar ist, vom Kot, der von den Tieren anfällt, gereinigt. Der Kot wird mittels der Schieber 5, 6 in den Koteinwurfschacht 4 gefahren. Einen Koteinwurfschacht 4 ungefähr im mittleren Bereich der Anordnung beziehungsweise weit innerhalb der Anordnung vorzusehen, hat den Vorteil, dass die Anordnung in Längsrichtung sowohl für die kleine Gruppe also der Ruhebereich 2, 3 an den äußeren Begrenzungen kostengünstig verlängert und vergrößert werden kann, ohne den Aufbau der gesamten Anordnung 1 verändern zu müssen. Ferner ist für beide Gruppen ein getrennter Zugang zu einem Außenbereich 200 möglich ohne dass extra Umgehungsmöglichkeiten geschaffen werden müssen, da hier im Gegensatz zum Stand der Technik kein Koteinwurfschacht 4 vorgesehen ist. Den Koteinwurfschacht 4 weit innerhalb der Anordnung anzuordnen, hat den weiteren Vorteil, dass in der kalten Jahreszeit das Gefrieren des Koteinwurfschachts 4 weitestgehend ausgeschlossen wird. Somit wird ein kostengünstiger und einfacher Aufbau der Anordnung 1 geschaffen.

Die Fig. 1 zeigt, dass der Koteinwurfschacht 4 angrenzend zum Melkbereich 7 angeordnet ist. Um einen Kanal 44 vom Koteinwurfschacht 4 möglichst minimiert auszubilden, ist eine verlängerte Abgrenzungskante 41 in der Länge mit einer Umgrenzungskante 71 des Melkbereichs im Wesentlichen zusammenfallend ausgebildet. Somit kann der Kot aus dem Melkbereich 7 und aus einem vor dem Melkbereich 7 angeordneten Orientierungsbereich 60 durch kurze Abwasser bzw. Entsorgungswege sauber und gereinigt werden.

Um den Aufbau der Anordnung 1 möglichst einfach auszugestalten, ist der Melkbereich 7 über zwei Reihen 26, 27 in der Breite ausgebildet. Diese Breite variiert von Anordnung zu Anordnung im Bereich von 4,60 m bis ca. 5,20 m. Die Breite entspricht einer Doppelreihe 26, 27 mit gegensinnig angeordneten Liegemulden für ruhende Tiere vom Ruhebereich 2, 3. Der Melkbereich 7 ist für einen effizienten Einsatz mit zwei Melkplätzen 8, 9 ausgebildet, die von einem Melkroboter 10 zum Melken der Tiere bedient werden. Der Melkroboter 10 steht mit einer Computersteuerung 21 in Informationskontakt. Ein Melkplatz 8, 9 umfasst einen Zugangsbereich 74, eine Tieridentifikationseinrichtung 13, 14 und einen Futtertrog 11, 12. Vor dem Zugangsbereich 74 ist jeweils eine Eingangstür 18, 18', 19 angeordnet. Die Eingangstüren sind als zwei vorgespannte, in eine Schwenkrichtung drehbare Türhälften bzw. Türflügel um eine Achse an jeweils gegenüberliegenden Türpfosten ausgebildet. Die Türen 18, 18', 19 sind mit der Computersteuerung 21 elektrisch verbunden und können von der Computersteuerung 21 ent- und verriegelt werden. An jedem Melkplatz 8, 9 befindet sich ein Futtertrog 11, 12 vor dem Ausgang des Melkplatzes 8, 9, so dass das Tier während dem Melkvorgang Kraftfutter zu sich nehmen kann. Der Futtertrog 11, 12 umfasst Kraftfutter mit einem Lockmittel, so dass die Tiere willig den Melkbereich 7 aufsuchen. Um den Durchsatz der Tiere zum und aus dem Melkplatz 8, 9 zu vereinfachen und zu beschleunigen, können die Tiere im Wesentlichen gerade den Melkplatz 8, 9 aufsuchen und gerade auch aus dem Melkplatz 8, 9 austreten. Hierfür ist bevorzugt der Futtertrog 11, 12 nach vorne und oben wegschwenkbar ausgebildet. Somit kann der Futtertrog 11, 12 nach Beendigung des Melkvorgangs nach oben geschwenkt werden und das Tier nach vorne aus dem Melkplatz 8, 9 gehen.

Im Zugangsbereich 74 hinter den Türen 18, 18', 19 ist eine erste Tieridentifikationseinrichtung 13, 14 für jeden Melkplatz 8, 9 vorgesehen. Die erste Tieridentifikationseinrichtung 13, 14 ist jeweils mit Computersteuerung 21 verbunden. Die Tieridentifikationseinrichtung 13, 14 arbeitet mit einem Tieridentifikationsmittel am Tier zusammen. Die Tieridentifikationseinrichtung 13, 14 erfasst das Tier, welches den Zugangsbereich 74 passiert, also durch die Tür 18, 18', 19 hindurch getreten ist. Die Tieridentifikationseinrichtung 13, 14, 15, die ein Sensor ist und ein Tieridentifikationsmittel am Tier detektiert, arbeitet mit der Computersteuerung zusammen und wertet aus, ob das Tier eine Melkberechtigung hat. Das Tier kann eine Melkberechtigung haben, wenn es beispielsweise einen erhöhten Melkbedarf hat, weil es frisch gekalbt hat, oder eine entsprechende lange Zeit zur Milchbildung verstrichen ist. Das Tier hat keine Melkberechtigung, wenn der letzte Melkvorgang erst kurze Zeit zurückliegt.

Stellt die Tieridentifikationseinrichtung 13, 14, 15 fest, dass das Tier keine Melkberechtigung hat, so schwenkt der Futtertrog 11, 12 weg oder wird zur Seite weggefahren, so dass das Tier den Melkplatz 8, 9schnell verlassen kann. Gemäß einer alternativen Ausführungsform, wird der Futtertrog 11, 12 nur herabgeschwenkt, wenn das Tier eine Melkberechtigung hat.

Jeder Melkplatz 8, 9 hat ferner eine Treibervorrichtung 28, 29. Die Treibervorrichtung umfasst eine Stromsteuerung mit einem Draht. Der Draht berührt das Tier, wenn das Tier sich im Melkplatz 8, 9 befindet. Die Treibervorrichtung 28, 29 steht mit der Computersteuerung 21 in Informationskontakt. Wenn das Tier den Melkplatz 8, 9 verlassen soll, aber nach einer gewissen Zeit nicht verlässt, obwohl es beispielsweise keine Melkberechtigung hat oder der Melkvorgang abgeschlossen wurde, wird von der Computersteuerung 21 die Treibervorrichtung angesteuert, die den Draht beispielsweise mit einem immer stärker werdenden Strom bzw. Stromimpuls beaufschlagt, so dass das Tier aus dem Melkplatz 8, 9 geht.

Der Melkbereich 7 umfasst ferner einen Zusammenführungsgang 70, in dem die Tiere aus dem Melkplatz 8 und dem Melkplatz 9 zusammengeführt werden und eine zweite Tieridentifikationseinrichtung 15 passieren. Die zweite Tieridentifikationseinrichtung 15 wird zusammen mit einer bzw. zwei computergesteuerten Türen 22, 23 als Sortiereinrichtung betrieben, um die Tiere wieder in zwei oder mehr, insbesondere drei Gruppen zu trennen. Nach Passieren der Tieridentifikationseinrichtung 15 wird das Tier erkannt und von der Computersteuerung 21 ausgewertet, zu welcher Tiergruppe das Tier gehört, so dass die Tür 22, 23 den Ausgang entweder zur großen oder zur kleinen Gruppe freigibt. Die Tür 22, 23 ist entweder pneumatisch oder hydraulisch oder elektromechanisch gesteuert.

Der Melkbereich 7 umfasst ferner zwei zwangsgeführte Türen 16, 17, die mechanisch vom Tier bewegt werden. Eine Tür 16 ist im Zugangsbereich 74 angeordnet und sorgt dafür, dass entweder ein Tier aus der ersten Gruppe oder ein Tier aus der zweiten Gruppe den Melkplatz 8, 9 erreichen kann und somit der Zugang für die jeweils andere Gruppe gesperrt ist. Eine weitere, mechanisch von den Tieren bewegbare Tür, die den Tierverkehr von den beiden Melkplätzen 8, 9 regelt, ist im Zusammenführungsgang 70 vor dem Ausgang vom Melkplatz 8, 9 angeordnet.

Zwischen dem Melkbereich 7 und einer Doppelreihe 26, 27 mit Liegeboxen vom Ruhebereich 2 ist ein Orientierungsbereich 60 angeordnet. Im Orientierungsbereich 60 können die Tiere der großen Gruppe aus dem Gang 40 über den Orientierungsbereich 60 in den Melkbereich 7 gelangen oder zum Fressgang 20 gehen. Die Tiere können auch im Orientierungsbereich 60 direkt aus dem Melkbereich 7 zum Fressgang 20 gehen und danach über den Orientierungsbereich 60 wieder in den Ruhebereich 2 zurückkehren.

Der Orientierungsbereich 60 und der Melkbereich 7 sind vorzugsweise mit einem Spaltenboden 64 ausgestattet, die Kot und Fäkalien direkt in den Kanal 44 zusammenführen. Der Kanal 44 führt Fäkalien und Kot aus dem Koteinwurfschacht 4 ab.

Die kleinere Gruppe hat einen separaten Fressgang 30. Die kleine Gruppe ist ferner in gegebenenfalls eine weitere Gruppe durch eine computergesteuerte Tür 23 eingeteilt. Die dritte Tiergruppe umfasst beispielsweise selektierte kranke Tiere, die separat von den anderen Tieren gehalten werden müssen. Auch der Fressgang 30 ist vom Fressgang 20 durch einen Koteinwurfschacht 4 in Verlängerung von dem Koteinwurfschacht 4 der Gänge 40 und 50 getrennt.

Der Ruhebereich 2 umfasst ferner einen Durchgang 62 der den Gang 40 im Ruhebereich 2 mit dem Fressgang 20 deutlich beabstandet vom Orientierungsbereich 60 verbindet. Somit haben die Tiere, die in der Doppelreihe 26, 27 oder einer Einzelreihe 24 einen Liegeplatz haben, die Möglichkeit, wenn sie beispielsweise aufgrund einer tierinternen Rangordnung einem bestimmten Tier aus dem Weg gehen wollen oder müssen die Möglichkeit, den Melkbereich 7 oder den Fressgang 20 entweder über den Orientierungsbereich 60 oder über den Durchgang 62 jeweils zu erreichen, ohne an dem Tier, welches aufgrund der Rangordnung gemieden wird, vorbeigehen zu müssen. Somit wird die Tierhaltung vereinfacht und das Wohlbefinden der Tiere steigt, Stress wird abgebaut, die Milchabgabe erhöht.

Die Fig. 2 zeigt einen vergrößerten Ausschnitt des Melkbereichs 7 gemäß einer alternativen Ausführungsform. Zur Fig. 2 werden grundsätzlich die wesentlichen Unterschiede zur Fig. 1 erläutert. Bei der Fig. 2 ist die Anordnung 1 mit einem Melkbereich 7 wie bei der Fig. 1 ausgebildet, so dass die Tier gerade in den Melkplatz 8, 9 laufen können und den Melkplatz 8, 9 gerade wieder verlassen können.

Ein wesentlicher Unterschied zur Fig. 1 ist, dass die Melkplätze 8, 9 direkt parallel nebeneinander liegen und der nicht dargestellte Melkroboter entweder seitlich jeweils am Melkplatz 8, 9 angeordnet ist oder über den Melkplätzen 8, 9 verfahrbar ist.

Der Zugangsbereich 74 gibt dem Tier die Möglichkeit über den Orientierungsbereich 60 gerade in den freien Melkplatz 8, 9 zu gehen. Ferner ist eine zwangsgeführte Tür 16 vorgesehen, die den Zutritt aus dem Ruhebereich 3 der kleinen Tiergruppe regelt. Der Futtertrog 11, 12 ist wie bei der Fig. 1 vorne wegschwenkbar ausgebildet. Im Zusammenführungsgang 70 ist wieder eine computergesteuerte Tür 22 angeordnet, um die Tiere nach dem Melkvorgang auf mindestens zwei verschiedene Gruppen aufzuteilen.

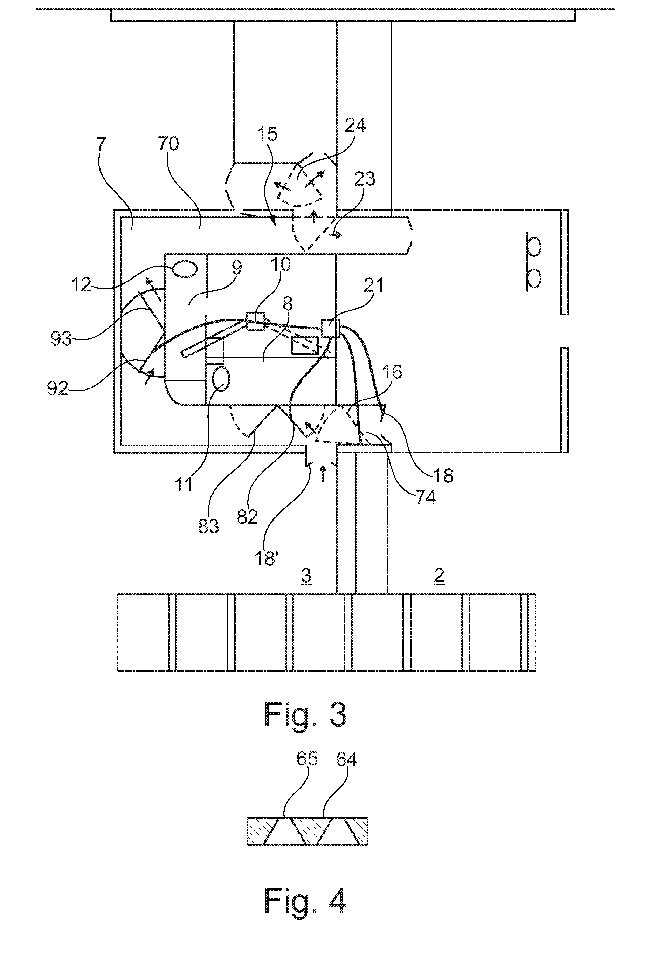

Die Fig. 3 zeigt eine weitere alternative Ausführungsform des Melkbereichs 7, wie er bevorzugt ausgebildet sein kann. Die Fig. 3 zeigt einen Melkbereich 7, der, wie in der Fig. 1, im Wesentlichen U-förmig in der Draufsicht ausgebildet ist. Ein wesentlicher Unterschied zu den Ausführungsformen gemäß Fig. 1 und 2 ist, dass der Zugang zum ersten und zweiten Melkplatz 8, 9 über einen einheitlichen Zugangsbereich 74 erfolgt. Somit ist nur eine erste Tieridentifikationseinrichtung 13 notwendig und nicht wie in Fig. 1 und 2 für jeden Melkplatz 8, 9 separat.

Die Melkplätze 8, 9 sind im Gegensatz zu Fig. 1 und 2 nicht parallel angeordnet sondern in einem rechten Winkel. Der Melkroboter 10 bedient somit die Melkplätze 8, 9 auch im rechten Winkel. Der Futtertrog 11, 12 vom Melkplatz 8, 9 ist im Gegensatz zur Fig. 1 und 2 fest angeordnet und wird nicht weggeschwenkt.

Ein weiterer Vorteil der Ausführungsform der Fig. 3 ist, dass der kleinen Gruppe, die ein erhöhtes Melkbedürfnis hat, im Gegensatz zu Fig. 1 und 2, zwei verfügbare Melkplätze angeboten werden können. Ist also beispielsweise der Melkplatz 8 belegt, hat eine Kuh der kleinen, frisch gekalbten Tiergruppe noch die Möglichkeit, den Melkplatz 9 aufzusuchen. Genauso kann umgekehrt, falls der Melkplatz 9 noch belegt ist, der Melkplatz 8 frei sein, somit wird die Milchabnahmemöglichkeit für stark melkbedürftige Tiere verdoppelt.

Auch bei dieser Anordnung ist, wie bei der Fig. 1 und 2, eine Türsteuerung vorgesehen, die auch die Türen 18, 18' zum Zugangsbereich 74 blockiert oder freigibt je nach dem, ob ein Melkplatz 8, 9 frei ist. Die Melkplätze 8 und 9 haben jeweils eine seitliche Platzeintritts- und Platzaustrittstür, so dass die Tiere schräg in die Melkbox gehen müssen. Ferner sind Platzeintrittstüren 82, 92 vom Melkplatz 8, 9 ebenfalls computergesteuert, so dass sicher der freie Melkplatz 8, 9 aufgesucht wird. Wie in der Fig. 1 und 2 kommen die Tiere nach Verlassen des Melkplatzes 8, 9 in einen einheitlichen Zusammenführungsgang 70, indem sie nach Passieren der zweiten Tieridentifikationseinrichtung 15 wieder auf die mindestens zwei oder drei Tiergruppen sortiert werden.

Die Fig. 4 zeigt in einem vergrößerten Ausschnitt einen Querschnitt eines Spaltenbodens 64. Die Spalten 65 sind in dem armierten Betonboden vorgesehen, damit die Fäkalien und Kot aus dem Orientierungsbereich 60 und dem Melkbereich 7 schnell abgeführt werden. Der Spaltenboden 64 hat im Querschnitt gesehen zur oberen Fläche hin sich beidseitig verjüngende Spalten 65.

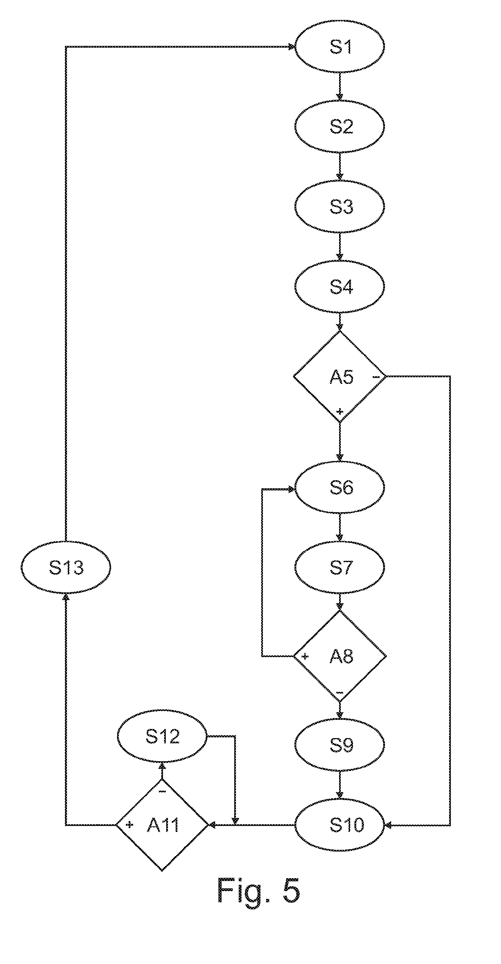

Die Fig. 5 zeigt ein Flussdiagramm eines bevorzugten Verfahrens, wie es bevorzugt in der Computersteuerung 21 abläuft, um die Tiere erfindungsgemäß computergesteuert zur Milchabgabe zu verwalten.

In einem Schritt S1 wird ein freier Zugang für ein zu melkendes Tier bereit gestellt, indem der Futtertrog 11, 12 gemäß Ausführungsform von Fig. 1 und 2 in die Grundposition gebracht wird und gegebenenfalls mit Kraftfutter und Lockmittel aufgefüllt wird. Dabei ist eine Einlasstüre 18, 19 im Zugangsbereich 74 bzw. zum Melkplatz 8, 9 noch verriegelt.

Danach geht das Verfahren zum Schritt S2 über. Im Schritt S2 wird die von einem Computer angesteuerte Türe 18, 18', 19 entriegelt und freigegeben, so dass ein melkbereites Tier in den Zugangsbereich 74 gelangen kann.

Im Schritt S3 passiert ein Tier die Tieridentifikationseinrichtung 13 und stoppt vor einem Futtertrog 11, 12.

Im Schritt S4 wird das Tier von der Computersteuerung 21 erkannt.

In einem Abfrageschritt A5 wird von der Computersteuerung 21 abgefragt, ob das Tier eine Melkberechtigung hat.

Hat das Tier eine Melkberechtigung, so beginnt ein Melkvorgang gemäß Schritt S6, indem der Melkvorgang nach tierindividuellen Daten abläuft. In einem optionalen Schritt wird dem Tier gegebenenfalls individuelles Kraftfutter zum Futtertrog 11 oder 12 zugeführt.

In einem Abfrageschritt A8 wird geprüft, ob der Melkvorgang fortgeführt werden soll oder der Melkvorgang beendet ist.

Mit dem Schritt S9 schließt der Melkroboter 10 den Melkvorgang ab.

Im Schritt S10 wird der Futtertrog 11, 12, wie in den Fig. 1 und 2 beschrieben weggeschwenkt oder weggefahren. In der Fig. 3 wird die Auslasstüre 83, 93 geöffnet, so dass das Tier den Melkplatz 8, 9 verlassen kann.

Hat das Tier keine Melkberechtigung was in den Abfrage A5 festgestellt worden ist, so wird sofort danach zu S10 gesprungen, so dass das Tier den Melkplatz verlassen muss und das Kraftfutter mit Lockmittel im Futtertrog bleibt.

Dem Schritt S10 folgt optional und bevorzugt eine Abfrage A11, in der geprüft wird, ob das Tier den Melkplatz verlassen hat. Dies wird wie nach dem Stand der Technik bekannt ausgeführt, beispielsweise über optische Sensoren oder über nach dem Stand der Technik bekannte Sensoren. Hat das Tier den Melkplatz nicht verlassen, so wird eine Treibereinrichtung 28, von der Computersteuerung 21 aktiviert. Die Treibereinrichtung 28 umfasst einen Draht, der das Tier berührt und deren Stromimpulse zunehmen, so dass das Tier die Stromimpulse als unangenehm empfindet und den Melkplatz 8, 9 verlässt.

Hat dagegen das Tier den Melkplatz 8, 9 bereits verlassen, so wird entsprechend der Ausführungsform gemäß der Fig. 1 und 2 der Futtertrog 11, 12 wieder in die Grundposition gebracht und die Computersteuerung 21 springt wieder zu Schritt S1 zurück.

Ist die Treibervorrichtung 28, 29 aktiviert worden, so wird in Schritt S13 die Treibervorrichtung 28, 29 von der Computersteuerung 21 deaktiviert.

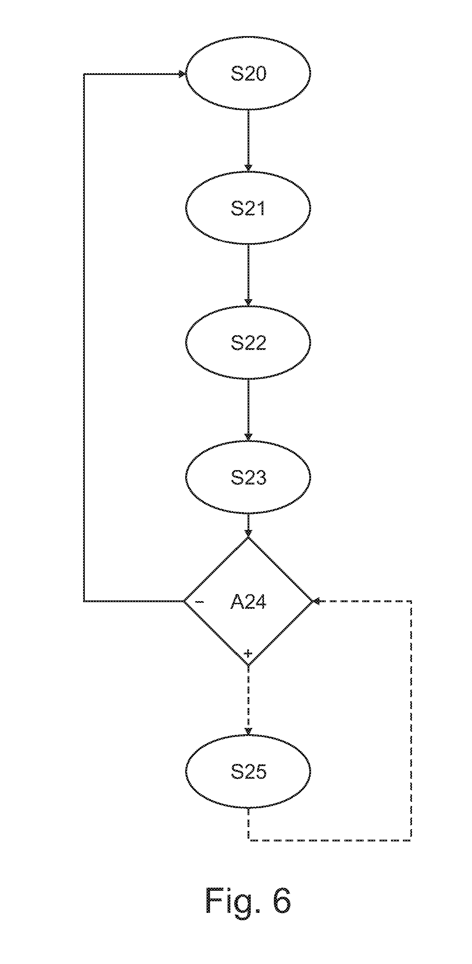

Die Fig. 6 zeigt das Flussdiagramm eines Verfahrens einer Sortiereinrichtung, das mit Hilfe der Computersteuerung 21 ausgeführt wird. Im Schritt S20 werden in dem Zusammenführungsgang 70 gemolkene und nicht gemolkene Tiere, beispielsweise aufgrund fehlender Melkberechtigung aus mindestens zwei Melkplätzen 8, 9 zusammengeführt. Ein gemeinsamer Zusammenführungsgang 70 hat den Vorteil, dass der Melkbereich 7 Platz sparend ausgebildet ist und nur eine Tieridentifikationseinrichtung 15 vorgesehen werden muss.

Im Schritt S21 passiert ein Tier einen Sensor der zweiten Tieridentifikationseinrichtung 15 mit einem Tieridentifikationsmittel.

Der Sensor übermittelt ein Identifikationssignal, das durch das Tieridentifikationsmittel am Tier ausgelöst wird, an eine Computersteuerung 21, die das Tier in Schritt 22 identifiziert und der richtigen Gruppe zuordnet. Das Tier wird entweder der großen Gruppe oder einer kleinen Gruppe, die beispielsweise frisch gekalbt hat oder einer dritten Tiergruppe, die beispielsweise kranke Tiere umfasst, zugeordnet.

Danach wird eine Türeinrichtung in Schritt S23 mittels der Computersteuerung 21 angesteuert. Die Tür 23 bzw. 24 gibt in Abhängigkeit vom identifizierten Tier einen speziellen Gang zu der speziellen Gruppe frei bzw. wird geöffnet oder geschwenkt.

In einer optionalen Abfrage A24 wird geprüft, ob das Tier den Zusammenführungsgang 70 verlassen hat, so dass optional eine Treibervorrichtung 28, 29 mit einem Schritt S25 aktiviert wird. Die Treibervorrichtung 28, 29 wird deaktiviert, sobald in der Abfrage A24 festgestellt worden ist, dass das Tier die Tür 23 und/oder 24 passiert hat. Das Verfahren kehrt zurück zu Schritt S20. Alle Figuren zeigen lediglich schematische nicht maßstabsgerechte Darstellungen. Im Übrigen wird insbesondere auf die zeichnerische Darstellungen für die Erfindung als wesentlich verwiesen.

### Bevorzugte Ausführungsformen der Erfindung sind:

Eine Anordnung 1 zur Unterbringung von milchgebenden Tieren mit einem Ruhebereich 2, 3, in dem Tiere ruhen, einem Fressbereich 20, 30, in dem Tieren Futter angeboten wird, einem Melkbereich 7 mit mindestens einem Melkroboter 10 und einer Computersteuerung 21 mit Mikrocomputer und Programmspeicher, einem Gang 40, 50, einem Koteinwurfschacht 4 und mit einem quer über der Breite des Gangs 40, 50 und in Längsrichtung des Gangs verfahrbaren Schieber 5, 6, der Kot von den Tieren in den Koteinwurfschacht schiebt, wobei der Koteinwurfschacht 4 den Ruhebereich 2, 3 in einen ersten Ruhebereich 2 und in einen zweiten Ruhebereich 3 teilt.

Ferner die vorstehende Anordnung, wobei der Koteinwurfschacht 4 angrenzend an den Melkbereich 7 angeordnet ist und insbesondere eine verlängerte Abgrenzungskante in der Länge des Koteinwurfschachts 4 mit dem einer Umgrenzungskante des Melkbereichs 7 im Wesentlichen zusammenfallend ausgebildet ist.

Außerdem eine der vorstehenden Anordnungen, wobei der Melkbereich über zwei Reihen für ruhende Tiere vom Ruhebereich in der Breite ausgebildet ist.

Zudem eine der vorstehenden Anordnungen, wobei ein Orientierungsbereich 60 an einem Ende des Gangs zwischen Melkbereich 7 und angrenzend an den Ruhebereich 2, 3 und Fressbereich 20 angeordnet ist, und insbesondere ein Durchgang 60 zwischen Ruhebereich 2 und Fressbereich 20 ausgebildet ist.

Darüber hinaus eine der vorstehenden Anordnungen, wobei im Melkbereich 7 eine computer- und tiergesteuerte Sortiereinrichtung angeordnet ist, um Tiere sortiert aus dem Melkbereich 7 herauszuführen.

Ferner eine der vorstehenden Anordnungen, wobei im Melkbereich 7 mindestens zwei Melkplätze 8, 9 zueinander rechtwinklig angeordnet sind.

Daneben eine Vorrichtung zum automatischen Melken von Tieren, insbesondere Kühen, für einen Melkbereich 7 in einer Anordnung, insbesondere einer vorstehenden Anordnung, mit einer Tieridentifikationseinrichtung 13, 14, die mit einem Tieridentifikationsmittel am Tier, einer Computersteuerung 21 sowie einem Melkroboter 10 und einem elektrisch steuerbaren Einlass 18, 18', 19 zusammenwirkt und mit einem Futtertrog 11, 12, wobei der Futtertrog 11, 12 an einem Melkplatz 8, 9 im Melkbereich 7 mittels einer gesteuerten Bewegungsvorrichtung in eine erste, das Tier zu melkenden Grundposition vor das Tier in Maulhöhe und in eine zweite, den Melkplatz 8, 9 öffnende Position verfahrbar, schwenkbar oder schiebbar ist.

Außerdem ein Verfahren zum computergesteuerten Verwalten von freilaufenden milchgebenden Tieren, die in einer Anordnung freilaufen, wobei die Anordnung, insbesondere eine der vorstehenden Anordnungen, mit mindestens zwei Ruhebereichen, einem Fressbereich 20 und einem Melkbereich 7, mit einem Melkroboter mit mindestens einem Melkplatz 8, 9, einer Computersteuerung 21 und mindestens einer ersten Tieridentifikationseinrichtung, wobei ein Tier zu einem Melkplatz 8, 9 im Melkbereich 7 durch Freigeben einer Zugangstür hereingelassen wird, mittels einer Tieridentifikationseinrichtung 13, 14 das Tier identifiziert wird und geprüft wird, ob das Tier eine Melkberechtigung hat, im positiven Fall das Tier mit dem Melkroboter gemolken wird, im negativen Fall oder nach dem Melkvorgang eine Einrichtung zum Verlassen des Melkplatzes freigegeben wird, vorzugsweise nachdem der Futtertrog weggeschwenkt wird und insbesondere geprüft wird, ob das Tier den Melkplatz verlassen hat und besonders bevorzugt das Tier mittels einer Treibervorrichtung aus dem Melkplatz getrieben wird.

Daneben ein Verfahren zum computergesteuerten Verwalten von freilaufenden milchgebenden Tieren, die in einer Anordnung freilaufen, wobei die Anordnung insbesondere eine der vorstehenden Anordnungen ist, mit mindestens Ruhebereich, einem Fressbereich, einem Melkbereich mit einem Melkroboter 10 mit mindestens einem Melkplatz 8, 9, einer Computersteuerung 21 und einer zweiten Tiererkennungseinrichtung, wobei mindestens ein Melkplatz Tieren aus zwei getrennten Ruhebereichen zugänglich gemacht wird, wobei Tiere in einem Ausgangsbereich des Melkbereichs, die mittels einer zweiten Tieridentifikationseinrichtung identifiziert werden, einer von mindestens zwei Gruppen zugeordnet werden und eine Sortiereinrichtung mit der Computersteuerung angesteuert wird, damit die Tiere der richtigen Gruppe zugeführt werden, wobei vorzugsweise geprüft wird, ob das Tier den Ausgangsbereich verlassen hat, im negativen Fall eine Treibereinrichtung von der Computersteuerung angesteuert wird, um das Tier aus dem Melkbereich zu treiben.

Schließlich ein Computerprogrammprodukt, das in einen Programmspeicher mit Programmbefehlen von einer Computersteuerung 21 , insbesondere ladbar ist, um alle Schritte eines vorstehenden Verfahrens auszuführen, wenn das Programm in der Computersteuerung 21 ausgeführt wird.

## Patentansprüche

1. Vorrichtung zum automatischen Melken von Tieren, insbesondere Kühen, für einen Melkbereich (7) in einer Anordnung zur Unterbringung von milchgebenden Tieren mit einer Tieridentifikationseinrichtung (13, 14), die mit einem Tieridentifikationsmittel am Tier, einer Computersteuerung (21) sowie einem Melkroboter (10) und einem elektrisch steuerbaren Einlass (18, 18', 19) zusammenwirkt und mit einem Futtertrog (11, 12), wobei der Futtertrog (11, 12) an einem Melkplatz (8, 9) im Melkbereich (7) mittels einer gesteuerten Bewegungsvorrichtung in eine erste, das Tier zu melkenden Grundposition vor das Tier in Maulhöhe und in eine zweite, den Melkplatz (8, 9) öffnende Position verfahrbar, schwenkbar oder schiebbar ist, so dass eine Auslasstür an dem Melkplatz nicht erforderlich ist, und wobei dem Tier ein im Wesentlichen gerader Laufweg zu dem Melkplatz und aus dem Melkplatz heraus bereitgestellt wird.

2. Vorrichtung nach Anspruch 1, wobei der Futtertrog nach vorne und oben wegschwenkbar ist.

3. Anordnung (1) zur Unterbringung von milchgebenden Tieren mit mindestens zwei Ruhebereichen (2, 3), in denen Tiere aus mindestens zwei Gruppen ruhen können, einem Fressbereich (20, 30), in dem Tieren Futter angeboten wird, einem Melkbereich (7) mit mindestens einem Melkroboter (10) und einer Computersteuerung (21) mit Mikrocomputer und Programmspeicher, einem Gang (40, 50), einem Koteinwurfschacht (4) und mit einem quer über der Breite des Gangs (40, 50) und in Längsrichtung des Gangs verfahrbaren Schieber (5, 6), der Kot von den Tieren in den Koteinwurfschacht schiebt, wobei der Melkbereich derart ausgebildet, dass der mindestens eine Melkroboter für die mindestens zwei Gruppen zugänglich ist und der Melkbereich eine Vorrichtung zum automatischen Melken nach einem vorstehenden Anspruch umfasst.

4. Anordnung nach Anspruch 3, wobei der Koteinwurfschacht (4) angrenzend an den Melkbereich (7) angeordnet ist und insbesondere eine verlängerte Abgrenzungskante in der Länge des Koteinwurfschachts (4) mit dem einer Umgrenzungskante des Melkbereichs (7) im Wesentlichen zusammenfallend ausgebildet ist.

5. Anordnung nach Anspruch 3 oder 4, wobei der Melkbereich über zwei Reihen für ruhende Tiere vom Ruhebereich in der Breite ausgebildet ist.

6. Anordnung nach einem vorstehenden Anspruch, wobei ein Orientierungsbereich (60) an einem Ende des Gangs zwischen Melkbereich (7) und angrenzend an den Ruhebereich (2, 3) und Fressbereich (20) angeordnet ist, und insbesondere ein Durchgang (60) zwischen Ruhebereich (2) und Fressbereich (20) ausgebildet ist.

7. Anordnung nach einem vorstehenden Anspruch, wobei im Melkbereich (7) eine computer- und tiergesteuerte Sortiereinrichtung angeordnet ist, um Tiere sortiert aus dem Melkbereich (7) herauszuführen.

8. Anordnung nach einem vorstehenden Anspruch, wobei im Melkbereich (7) mindestens zwei Melkplätze (8, 9) zueinander rechtwinklig angeordnet sind.

9. Verfahren zum computergesteuerten Verwalten von freilaufenden milchgebenden Tieren, die in einer Anordnung freilaufen, wobei die Anordnung nach einem der Ansprüche 3 bis 8 ausgebildet ist, mit mindestens einer Vorrichtung zum automatischen Melken von Tieren nach einem der Ansprüche 1 oder 2.

10. Verfahren nach Anspruch 9, wobei ein Tier zu einem Melkplatz (8, 9) im Melkbereich (7) durch Freigeben einer Zugangstür hereingelassen wird, mittels einer Tieridentifikationseinrichtung (13, 14) das Tier identifiziert wird und geprüft wird, ob das Tier eine Melkberechtigung hat, im positiven Fall das Tier mit dem Melkroboter gemolken wird, im negativen Fall oder nach dem Melkvorgang eine Einrichtung zum Verlassen des Melkplatzes freigegeben wird, vorzugsweise nachdem der Futtertrog weggeschwenkt wird und insbesondere geprüft wird, ob das Tier den Melkplatz verlassen hat und besonders bevorzugt das Tier mittels einer Treibervorrichtung aus dem Melkplatz getrieben wird.

11. Verfahren nach einem vorstehenden Anspruch mit zwei Ruhebereichen, einem Fressbereich, einem Melkbereich mit einem Melkroboter (10) mit mindestens einem Melkplatz (8, 9), einer Computersteuerung (21) und einer zweiten Tiererkennungseinrichtung, wobei mindestens ein Melkplatz Tieren aus zwei getrennten Ruhebereichen zugänglich gemacht wird, wobei Tiere in einem Ausgangsbereich des Melkbereichs, die mittels einer zweiten Tieridentifikationseinrichtung identifiziert werden, einer von mindestens zwei Gruppen zugeordnet werden und eine Sortiereinrichtung mit der Computersteuerung angesteuert wird, damit die Tiere der richtigen Gruppe zugeführt werden, wobei vorzugsweise geprüft wird, ob das Tier den Ausgangsbereich verlassen hat, im negativen Fall eine Treibereinrichtung von der Computersteuerung angesteuert wird, um das Tier aus dem Melkbereich zu treiben.

12. Verfahren nach einem vorstehenden Anspruch, wobei Tieren aus getrennten Ruhebereichen mindestens zwei Melkplätze angeboten werden und nach Durchlaufen des Melkplatzes die Tiere wieder zusammengeführt und mittels der Sortiereinrichtung für verschiedene Ruhebereiche wieder aufgeteilt werden oder in verschiedene Gruppen wieder aufgeteilt werden.

13. Computerprogrammprodukt, das in einen Programmspeicher mit Programmbefehlen von einer Computersteuerung (21), insbesondere ladbar ist, um alle Schritte eines Verfahrens nach einem der Ansprüche 9 bis 12 auszuführen, wenn das Programm in der Computersteuerung (21) ausgeführt wird.
